# EUROPÄISCHE PATENTANMELDUNG

(11) **EP 1 791 304 A1**
(43) Veröffentlichungstag der Anmeldung: **30.05.2007**
(21) Anmeldenummer: 05025921.7
(22) Anmeldetag: 28.11.2005
(51) Int. Cl.: H04L 12/56

(54) **Zufallszugriffe durch Teilnehmerstationen in einem Mobilfunkkommunikationssystem**

(71) Anmelder: SIEMENS AKTIENGESELLSCHAFT, 80333 München (DE)
(72) Erfinder: Costa, Elena, Dr., 81739 München (DE); Schulz, Egon, Dr., 80993 München (DE); Zhang, Ying, 81737 München (DE)

(57) **Zusammenfassung**

Die Erfindung betrifft ein Verfahren zur Kommunikation per Funk zwischen einer netzseitigen Funkstation (BS) und Teilnehmerstationen (MS1, MS2), bei dem Zeitspannen (TREQ) zur Verfügung stehen zur Versendung von Zufallszugriffsnachrichten (RES-REQ) durch die Teilnehmerstationen (MS1, MS2), welche einen Funkressourcenbedarf signalisieren. Erfindungsgemäß verwenden zumindest zwei Teilnehmerstationen (MS1, MS2) für ihre Zufallszugriffsnachrichten (RES-REQ) voneinander verschiedene Modulationsverfahren und/oder voneinander verschiedene Kodierverfahren. Weiterhin betrifft die Erfindung eine netzseitige Funkstation (BS) und eine Teilnehmerstation (MS1, MS2) zur Durchführung des Verfahrens.

## Beschreibung

Die Erfindung betrifft Verfahren zur Kommunikation per Funk, wobei Zeitspannen zur Versendung von Zufallszugriffsnachrichten zur Verfügung stehen.

In Funkkommunikationssystemen werden Nachrichten, beispielsweise mit Sprachinformation, Bildinformation, Videoinformation, SMS (Short Message Service), MMS (Multimedia Messaging Service) oder anderen Daten, mit Hilfe von elektromagnetischen Wellen über eine Funkschnittstelle zwischen sendender und empfangender Station übertragen. Bei den Stationen kann es sich hierbei je nach konkreter Ausgestaltung des Funkkommunikationssystems um verschiedenartige Teilnehmerstationen oder netzseitige Funkeinrichtungen wie Repeater, Funkzugangspunkte oder Basisstationen handeln. In einem Mobilfunkkommunikationssystem handelt es sich bei zumindest einem Teil der Teilnehmerstationen um mobile Funkstationen. Das Abstrahlen der elektromagnetischen Wellen erfolgt mit Trägerfrequenzen, die in dem für das jeweilige System vorgesehenen Frequenzband liegen.

Mobilfunkkommunikationssysteme sind oftmals als zellulare Systeme z.B. nach dem Standard GSM (Global System for Mobile Communication) oder UMTS (Universal Mobile Telecommunications System) mit einer Netzinfrastruktur bestehend z.B. aus Basisstationen, Einrichtungen zur Kontrolle und Steuerung der Basisstationen und weiteren netzseitigen Einrichtungen ausgebildet. Außer diesen weiträumig organisierten (supralokalen) zellularen, hierarchischen Funknetzen gibt es auch drahtlose lokale Netze (WLANs, Wireless Local Area Networks) mit einem in der Regel räumlich deutlich stärker begrenzten Funkabdeckungsbereich. Beispiele verschiedener Standards für WLANs sind HiperLAN, DECT, IEEE 802.11, Bluetooth und WATM.

Der Zugriff von Teilnehmerstationen auf das gemeinsame Übertragungsmedium wird bei Funkkommunikationssystemen durch Vielfachzugriffsverfahren/Multiplexverfahren (Multiple Access, MA) geregelt. Bei diesen Vielfachzugriffen kann das Übertragungsmedium im Zeitbereich (Time Division Multiple Access, TDMA), im Frequenzbereich (Frequency Division Multiple Access, FDMA), im Codebereich (Code Division Multiple Access, CDMA) oder im Raumbereich (Space Division Multiple Access, SDMA) zwischen den Teilnehmerstationen aufgeteilt werden. Auch Kombinationen von Vielfachzugriffsverfahren sind möglich, wie z.B. die Kombination eines Frequenzbereichs-Vielfachzugriffsverfahrens mit einem Codebereichs-Vielfachzugriffsverfahren.

Meist versenden Teilnehmerstationen Nachrichten mit Nutzdaten nicht unangekündigt. Vielmehr senden Teilnehmerstationen zuvor Zufallszugriffsnachrichten, welche der netzseitigen Funkstation anzeigen, dass die jeweilige Teilnehmerstation Funkressourcen für die Versendung und/oder für den Empfang von Nachrichten mit Nutzdaten benötigt. Üblicherweise stehen den Teilnehmerstationen periodisch Zeitspannen zur Versendung der Zufallszugriffsnachrichten zur Verfügung.

Es kann unterschieden werden zwischen auf Wettbewerb basierenden Zufallszugriffsverfahren (englisch: contention access) und Polling-Verfahren. Bei wettbewerbsbasierten Zufallszugriffsverfahren steht eine Zeitspanne einer Mehrzahl von Teilnehmerstationen zur Versendung ihrer Zufallszugriffsnachrichten zur Verfügung. Ein Zufallszugriff einer Teilnehmerstation ist nur erfolgreich, wenn die versendete Zufallszugriffsnachricht nicht mit der Zufallszugriffsnachricht einer anderen Teilnehmerstation kollidiert. Bei den Polling-Verfahren steht jeder Teilnehmerstation exklusiv eine Zeitspanne für die Versendung ihrer Zufallszugriffsnachrichten zur Verfügung. Aufgrund der hierdurch verursachten Verschwendung von Funkressourcen eignen sich Polling-Verfahren insbesondere für Systeme mit einer geringen Anzahl von Teilnehmerstationen, welche jeweils ein hohes Funkverkehrsaufkommen haben. Wettbewerbsbasierte Verfahren hingegen eignen sich für burstartige Übertragungen; allerdings sinkt die Effizienz dieser Verfahren mit steigendem Gesamtverkehrsaufkommen.

Der Erfindung liegt die Aufgabe zugrunde, effiziente Verfahren zur Kommunikation per Funk aufzuzeigen, bei welchen Teilnehmerstationen Zufallszugriffsnachrichten versenden. Weiterhin sollen eine Teilnehmerstation und eine netzseitige Funkstation zur Durchführung des Verfahrens aufgezeigt werden.

Diese Aufgabe wird durch ein Verfahren mit den Merkmalen des Anspruchs 1, sowie durch ein Verfahren und Vorrichtungen mit Merkmalen von nebengeordneten Ansprüchen gelöst. Vorteilhafte Ausgestaltungen und Weiterbildungen sind Gegenstand von Unteransprüchen.

Bei dem erfindungsgemäßen Verfahren zur Kommunikation per Funk zwischen einer netzseitigen Funkstation und Teilnehmerstationen stehen Zeitspannen zur Verfügung zur Versendung von Zufallszugriffsnachrichten durch die Teilnehmerstationen. Hierbei signalisieren die Zufallszugriffsnachrichten einen Funkressourcenbedarf. Erfindungsgemäß verwenden zumindest zwei Teilnehmerstationen für ihre Zufallszugriffsnachrichten voneinander verschiedene Modulationsverfahren und/oder voneinander verschiedene Kodierverfahren.

Bei der netzseitigen Funkstation kann es sich insbesondere um eine Basisstation, d.h. um eine netzseitige Funkstation eines zellularen Systems, handeln. Es ist jedoch auch möglich, dass die netzseitige Funkstation einen Bestandteil eines lokalen Netzes darstellt. Bei den Teilnehmerstationen kann es sich um verschiedenartige mobile oder stationäre teilnehmerseitige Endgeräte handeln.

Es stehen Zeitspannen zur Versendung von Zufallszugriffsnachrichten zur Verfügung. Das Zur-Verfügung-Stehen der Zeitspannen bedeutet, dass diese Zeitspannen weder von der netzseitigen Funkstation noch von den Teilnehmerstationen zur Versendung anderer Nachrichten als Zufallszugriffsnachrichten verwendet werden. Die Zufallszugriffsnachrichten von zumindest zwei Teilnehmerstationen unterscheiden sich hinsichtlich ihres Modulationsverfahrens oder hinsichtlich ihres Kodierverfahrens oder hinsichtlich beider Verfahren. Bei der Modulation und Kodierung handelt es sich um an sich bekannte Methoden der senderseitigen Nachrichtenverarbeitung. Die Kodierung kann insbesondere die Kanalkodierung, durch welche einer Nachricht Redundanz hinzugefügt wird, betreffen.

Das Verfahren kann auf mehr als zwei Teilnehmerstationen angewandt werden. In diesem Fall existieren zwei oder mehr Gruppen von Teilnehmerstationen, wobei jede Gruppe aus einer oder mehreren Teilnehmerstationen besteht. Die Teilnehmerstationen einer Gruppe verwenden das gleiche Modulations- und Kodierverfahren, während sich Teilnehmerstationen verschiedener Gruppen hinsichtlich des von ihnen verwendeten Modulations- und/oder Kodierverfahrens voneinander unterscheiden.

Vorteilhafterweise existieren zwei oder mehrere Kombinationen aus Modulations- und Kodierverfahren, welche den Teilnehmerstationen bekannt sind und deren Benutzung für Zufallszugriffsnachrichten erlaubt ist.

In Ausgestaltung der Erfindung unterscheiden sich die Längen der Zufallszugriffsnachrichten der zumindest zwei Teilnehmerstationen voneinander. In diesem Fall bewirkt der Unterschied bezüglich des Modulations- und/oder Kodierverfahrens einen Unterschied in der Nachrichtenlänge, welcher bei Gleichheit bezüglich Modulations- und Kodierverfahren nicht vorhanden wäre.

Einer vorteilhaften Weiterbildung der Erfindung gemäß verwenden die zumindest zwei Teilnehmerstationen das jeweilige Modulationsverfahren und/oder Kodierverfahren in Abhängigkeit von jeweiligen aktuellen Funkkanalbedingungen zwischen der netzseitigen Funkstation und der jeweiligen Teilnehmerstation. Den Teilnehmerstationen stehen somit Informationen über die aktuellen Funkkanalbedingungen bei einer Übertragung zwischen der jeweiligen Teilnehmerstation und der netzseitigen Funkstation zur Verfügung. Diese Informationen werden verwendet, um über das zu verwendende Modulations- und/oder Kodierverfahren zu entscheiden. Mit Vorzug bestimmen die zumindest zwei Teilnehmerstationen die aktuellen Funkkanalbedingungen jeweils unter Verwendung von Messungen der Empfangsstärke von zumindest einem von der netzseitigen Funkstation ausgestrahlten Signal. Hierzu können insbesondere per Broadcast nicht eigens für die Zwecke der Erfindung von der netzseitigen Funkstation ausgestrahlte Signale herangezogen werden.

In Weiterbildung der Erfindung verwenden die Teilnehmerstationen in ersten Zeitspannen ausschließlich Zufallszugriffsnachrichten eines ersten Modulationsverfahrens und/oder Kodierverfahrens und in zweiten Zeitspannen ausschließlich Zufallszugriffsnachrichten eines zweiten Modulationsverfahrens und/oder Kodierverfahrens. Die ersten und die zweiten Zeitspannen sind hierbei Bestandteil der für die Versendung von Zufallszugriffsnachrichten zur Verfügung stehenden Zeitspannen. Sie weisen keine Überschneidungen bzw. keinen zeitlichen Überlapp auf. Die Zufallszugriffsnachrichten des ersten Typs, d.h. die während den ersten Zeitspannen versendeten Zufallszugriffsnachrichten, unterscheiden sich von den Zufallszugriffsnachrichten des zweiten Typs, d.h. von den während den zweiten Zeitspannen versendeten Zufallszugriffsnachrichten, durch ihr Modulationsverfahren und/oder durch ihr Kodierverfahren. Es werden in den ersten Zeitspannen keine Zufallszugriffsnachrichten des zweiten Typs versendet und umgekehrt. Vorzugsweise unterscheidet sich die Länge der ersten Zeitspannen von der Länge der zweiten Zeitspannen.

Vorteilhaft ist es, wenn den Teilnehmerstationen eine Zuordnung bekannt ist zwischen einerseits jeweils einem Modulationsverfahren und/oder einem Kodierverfahren und andererseits für die Versendung von Zufallszugriffsnachrichten dieses Modulationsverfahrens und/oder einem Kodierverfahrens zur Verfügung stehenden Zeitspannen. Auf diese Weise können die Teilnehmerstationen z.B. zuerst über das zu verwendende Modulationsverfahren und/oder Kodierverfahren entscheiden, um dann anhand der ihnen bekannten Zuordnung für die Zufallszugriffsnachrichten verwendbare Zeitspannen zu ermitteln.

Bei einem zweiten erfindungsgemäßen Verfahren zur Kommunikation per Funk zwischen einer netzseitigen Funkstation und Teilnehmerstationen stehen Zeitspannen zur Verfügung zur Versendung von Zufallszugriffsnachrichten durch die Teilnehmerstationen. Die Zufallszugriffsnachrichten signalisieren hierbei einen Funkressourcenbedarf. Erfindungsgemäß empfängt die netzseitige Funkstation Zufallszugriffsnachrichten mit voneinander verschiedenen Modulationsverfahren und/oder voneinander verschiedenen Kodierverfahren. Obige Erläuterungen hinsichtlich des ersten erfindungsgemäßen Verfahrens sind entsprechend auch auf das zweite erfindungsgemäße Verfahren anwendbar.

In Weiterbildung der Erfindung empfängt die netzseitige Funkstation von Teilnehmerstationen in ersten Zeitspannen ausschließlich Zufallszugriffsnachrichten eines ersten Modulationsverfahrens und/oder Kodierverfahrens und in zweiten Zeitspannen ausschließlich Zufallszugriffsnachrichten eines zweiten Modulationsverfahrens und/oder Kodierverfahrens. Die ersten und die zweiten Zeitspannen sind hierbei Bestandteil der für die Versendung von Zufallszugriffsnachrichten zur Verfügung stehenden Zeitspannen. Sie weisen keine Überschneidungen bzw. keinen zeitlichen Überlapp auf. Die Zufallszugriffsnachrichten des ersten Typs, d.h. die während den ersten Zeitspannen empfangenen Zufallszugriffsnachrichten, unterscheiden sich von den Zufallszugriffsnachrichten des zweiten Typs, d.h. von den während den zweiten Zeitspannen empfangenen Zufallszugriffsnachrichten, durch ihr Modulationsverfahren und/oder durch ihr Kodierverfahren. Es werden in den ersten Zeitspannen keine Zufallszugriffsnachrichten des zweiten Typs empfangen und umgekehrt. Die Länge der ersten Zeitspannen unterscheidet sich hierbei vorzugsweise von der Länge der zweiten Zeitspannen.

Die erfindungsgemäße netzseitige Funkstation weist Mittel auf zum Empfangen von Zufallszugriffsnachrichten, welche einen Funkressourcenbedarf signalisieren, in hierfür zur Verfügung stehenden Zeitspannen, sowie Mittel zum Empfangen von Zufallszugriffsnachrichten mit voneinander verschiedenen Modulationsverfahren und/oder voneinander verschiedenen Kodierverfahren.

Die erfindungsgemäße Teilnehmerstation zur Kommunikation per Funk mit einer netzseitige Funkstation weist Mittel auf zum Versenden von Zufallszugriffsnachrichten, welche einen Funkressourcenbedarf signalisieren, in hierfür zur Verfügung stehenden Zeitspannen, sowie Mittel zum Verwenden von voneinander verschiedenen Modulationsverfahren und/oder Kodierverfahren für ihre Zufallszugriffsnachrichten.

Die erfindungsgemäße netzseitige Funkstation und die erfindungsgemäße Teilnehmerstation eignen sich insbesondere zur Durchführung der erfindungsgemäßen Verfahren, wobei dies auch auf die Ausgestaltungen und Weiterbildungen zutreffen kann. Hierzu können sie weitere geeignete Mittel umfassen.

Im folgenden wird die Erfindung anhand eines Ausführungsbeispiels näher erläutert. Dabei zeigen:
- Figur 1:: einen Ausschnitt aus einem Funkkommunikationssystem,
- Figur 2:: eine Aufteilung einer Zufallszugriffszeitspanne.

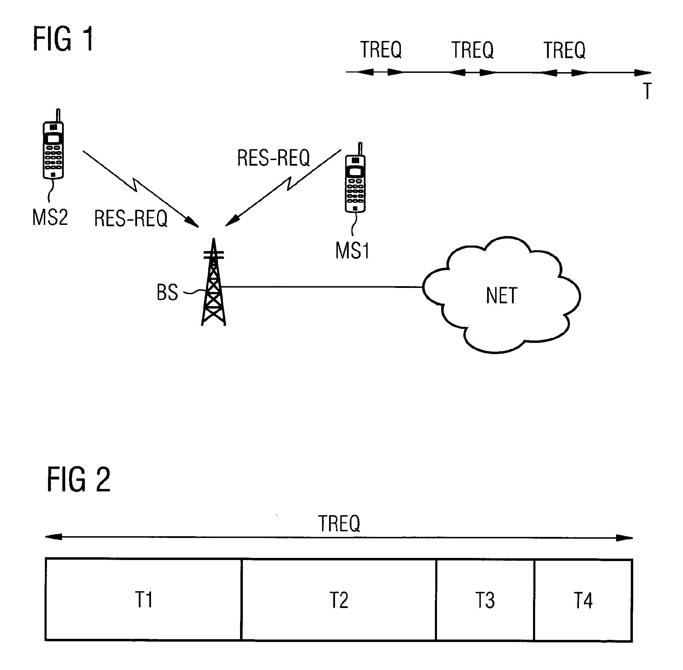

Der in Figur 1 dargestellte Ausschnitt aus einem Funkkommunikationssystem umfasst die Basisstation BS, welche an weitere netzseitige Einrichtungen NET angeschlossen ist. Innerhalb der Funkreichweite der Basisstation BS befinden sich die Teilnehmerstationen MS1 und MS2, welche mit der Basisstation BS kommunizieren können. Bevor eine solche Kommunikation zwischen einer Teilnehmerstation MS1 oder MS2 und der Basisstation BS, d.h. die Versendung von Nachrichten von der jeweiligen Teilnehmerstation MS1 oder MS2 an die Basisstation BS und/oder die Versendung von Nachrichten von der Basisstation BS an die jeweilige Teilnehmerstation MS1 oder MS2, stattfinden kann, werden der jeweiligen Teilnehmerstation MS1 oder MS2 Funkressourcen von der Basisstation BS zugewiesen. Geht die Kommunikation von einer Teilnehmerstation MS1 oder MS2 aus, so fordert die jeweilige Teilnehmerstationen MS1 oder MS2 zuvor die Zuweisung von Funkressourcen an. Dies erfolgt, indem die Teilnehmerstation MS1 oder MS2 eine Nachricht RES-REQ an die Basisstation BS sendet. Die Basisstation BS erkennt an dem Inhalt der Nachrichten RES-REQ, welche Funkressourcen benötigt werden und antwortet nach einem erfolgreichen Empfang einer Nachricht RES-REQ mit einer Zuweisung von Funkressourcen an die jeweilige Teilnehmerstation MS1 oder MS2. Bei den Funkressourcen, welche die Basisstation BS auf eine Nachricht RES-REQ hin zuweist, kann es sich um eine oder mehrere Funkfrequenzen und/oder zu verwendende Kodes und/oder einen oder mehrere Zeitschlitze und/oder Raumrichtungen der Nachrichtenversendung handeln.

Für die Versendung einer Nachricht RES-REQ stehen den Teilnehmerstationen MS1 und MS2 hierfür bestimmte Zeitabschnitte zur Verfügung. In Figur 1 ist der Ablauf der Zeit T aufgetragen, wobei die periodisch angeordneten Zeitabschnitte TREQ ausschließlich der Versendung von Nachrichten RES-REQ dienen.

Da die Versendung der Nachrichten RES-REQ von dem Verkehrsaufkommen der Teilnehmerstationen MS1 und MS2 abhängt und somit für die Basisstation BS nicht exakt vorhersehbar ist, handelt es sich bei den Nachrichten RES-REQ um Zufallszugriffsnachrichten bzw. bei der Versendung einer Nachricht RES-REQ um einen Zufallszugriff auf Funkressourcen. Versenden mehrere Teilnehmerstationen gleichzeitig eine Nachricht RES-REQ, so können diese Nachrichten RES-REQ kollidieren, so dass die Basisstation BS lediglich eine oder keine der beiden Nachrichten RES-REQ korrekt empfangen bzw. dekodieren kann. Im Falle, dass die Basisstation BS eine Nachricht RES-REQ nicht korrekt dekodieren kann, erfolgt keine Zuweisung von Funkressourcen an die jeweilige Teilnehmerstation. Da der Zufallszugriff somit nicht erfolgreich war, muss die jeweilige Teilnehmerstation erneut eine Nachricht RES-REQ versenden.

Da die für die Zufallszugriffe zur Verfügung stehenden Zeitabschnitte TREQ nicht zur Übertragung von Nutzdaten eingesetzt werden können, verringert das Zur-Verfügung-Stellen der Zufallszugriffszeitabschnitte TREQ den Datendurchsatz. Daher sollten die Zufallszugriffszeitabschnitte TREQ nicht zu lange gewählt werden. Eine lediglich kurze Zeitspanne TREQ für Zufallszugriffe jedoch erhöht die Wahrscheinlichkeit der Kollision von gesendeten Zufallszugriffsnachrichten RES-REQ. Hierdurch steigt die von den Teilnehmerstationen MS1 und MS2 erfahrene Verzögerung an. Unter dieser Verzögerung wird hierbei die Zeit verstanden, welche zwischen der Versendung einer Zufallszugriffsnachricht RES-REQ und dem Empfang einer Bestätigung von der Basisstation BS betreffend den korrekten Empfang der Zufallszugriffsnachricht RES-REQ bzw. der Zuweisung von Funkressourcen durch die Basisstation BS verstreicht. Daher ist es erstrebenswert, Regelungen betreffend die Versendung von Zufallszugriffsnachrichten RES-REQ zu treffen, welche eine effiziente Ausnutzung der Zufallszugriffszeitspannen TREQ ermöglichen.

Für die Versendung der Nachrichten RES-REQ können die Teilnehmerstationen MS1 und MS2 verschiedene Modulations- und oder Kodierverfahren einsetzen.
Beispiele für Modulationsverfahren sind: BPSK, wobei jeweils ein Bit in einem Symbol enthalten ist, QPSK, wobei jeweils 2 Bits in einem Symbol enthalten sind, 16QAM, wobei jeweils 4 Bits in einem Symbol enthalten sind. Durch die Kodierung werden den ursprünglichen Bits der Nachricht RES-REQ Redundanzbits hinzugefügt, z.B. durch Repetition von Bits und/oder das Hinzufügen von Prüfsummen, welche der Fehlererkennung oder - behebung dienen. Bei einer Koderate von ½ beispielsweise liegen nach der Kodierung doppelt so viele Bits vor wie vor der Kodierung, bei einer Koderate von 2/3 liegen nach der Kodierung eineinhalb mal so viele Bits vor wie vor der Kodierung. Eine Kombination aus einem bestimmen Modulations- und einem bestimmten Kodierverfahren wird im folgenden als Burst-Format bezeichnet. Zwei für die Versendung von Zufallszugriffsnachrichten RES-REQ verwendete Burst-Formate können sich durch das Modulationsverfahren oder durch das Kodierverfahren oder durch das Modulations- und das Kodierverfahren voneinander unterscheiden.

Die Länge einer versendeten Zufallszugriffsnachricht RES-REQ hängt von dem verwendeten Burst-Format ab. Es existiert somit zumindest ein Burst-Format mit langen Zufallszugriffsnachricht RES-REQ und ein Burstformat mit kurzen Zufallszugriffsnachricht RES-REQ. Hierbei bezieht sich die Bezeichnung "lange" bzw. "kurze" Zufallszugriffsnachricht RES-REQ jeweils auf eine bestimmte "Netto"-Anzahl von Bits, d.h. auf eine Anzahl von Bits einer Zufallszugriffsnachricht RES-REQ vor Modulation und Kodierung. Ein hochwertiges Modulationsverfahren und eine niedrige Kodierung resultiert in einer kurzen Zufallszugriffsnachricht RES-REQ. Während eine Vielzahl von verschiedenen Burst-Formaten eingesetzt werden kann, wird im folgenden davon ausgegangen, dass lediglich zwei verschiedene Burst-Formate für die Zufallszugriffsnachrichten RES-REQ verwendet werden.

Die Teilnehmerstationen MS1 und MS2 führen vor Versendung einer Zufallszugriffsnachricht RES-REQ Messungen betreffend die aktuellen Funkausbreitungsbedingungen zwischen der jeweiligen Teilnehmerstation MS1 oder MS2 und der Basisstation BS durch. Dies erfolgt vorzugsweise, indem die Teilnehmerstationen MS1 und MS2 die jeweilige Empfangsstärke von durch die Basisstation BS per Broadcast ausgestrahlten Signalen bestimmen. Je höher die Empfangsstärke ist, desto geringer ist die Funkdämpfung zwischen der jeweiligen Teilnehmerstation MS1 oder MS2 und der Basisstation BS. Die Funkdämpfung hängt von der Entfernung zur Basisstation BS ab, und weiterhin vom Vorhandensein von Hindernissen wie z.B. Gebäuden oder Bäumen.

Abhängig von den ermittelten Funkausbreitungsbedingungen wählen die Teilnehmerstationen MS1 und MS2 ein Burst-Format für die Versendung ihrer Zufallszugriffsnachrichten RES-REQ aus. Bei gutem Funkkanal wird ein Burst-Format gewählt, welches einer kurzen Zufallszugriffsnachricht RES-REQ entspricht, und bei schlechtem Funkkanal wird ein Burst-Format gewählt, welches einer langen Zufallszugriffsnachricht RES-REQ entspricht. Da ein Burst-Format mit einer langen Zufallszugriffsnachricht RES-REQ eine zuverlässigere Dekodierung der Zufallszugriffsnachricht RES-REQ ermöglicht, gleicht dies zumindest teilweise den Effekt des schlechten Funkkanals bzw. der starken Funkdämpfung aus. Gemäß den Abständen zwischen den Teilnehmerstationen MS1 und MS2 und der Basisstation BS der Konstellation der Figur 1 sendet die Teilnehmerstation MS1 eine kurze Zufallszugriffsnachricht RES-REQ, während die Teilnehmerstation MS2 eine lange Zufallszugriffsnachricht RES-REQ sendet. Die Auswahl des zu verwendenden Burst-Formats treffen die Teilnehmerstationen MS1 und MS2 unter Verwendung einer ihnen bekannten Zuordnungstabelle. Die Zuordnungstabelle wird vorzugsweise selten oder nie geändert, so dass kein großer Umfang von Funkressourcen durch die Signalisierung der Zuordnungen aufgewendet werden muss.

Die Abhängigkeit des für die Versendung der Zufallszugriffsnachrichten RES-REQ verwendeten Burst-Formats von den Funkkanalbedingungen resultiert in einer effizienten Ausnutzung der für die Zufallszugriffe zur Verfügung stehenden Zeitspannen TREQ. Denn mit abnehmender Länge der Zufallszugriffsnachrichten RES-REQ sinkt das Kollisionsrisiko, wodurch sich die Verzögerung verringert. Somit können pro Zufallszugriffszeitspanne TREQ im Schnitt mehr erfolgreiche Übertragungen von Zufallszugriffsnachrichten RES-REQ erfolgen. Würde hingegen lediglich ein Burst-Format für die Zufallszugriffsnachrichten RES-REQ zugelassen, so müsste das dem schlechtesten Funkkanal, d.h. dem Funkkanal einer weit von der Basisstation BS entfernten Teilnehmerstation, entsprechende Burst-Format verwendet werden. Dies würde bedeuteten, dass alle Teilnehmerstationen lange Zufallszugriffsnachrichten RES-REQ versenden, wodurch lediglich wenige Versendungen von Zufallszugriffsnachrichten RES-REQ innerhalb der Zufallszugriffszeitspanne TREQ möglich wären.

Figur 2 zeigt eine Aufteilung einer Zufallszugriffszeitspanne TREQ in die beiden längeren Zeitspannen T1 und T2 und die beiden kürzeren Zeitspannen T3 und T4. Die beiden langen Zeitspannen T1 und T2 sind für ein Burst-Format mit langen Zufallszugriffsnachrichten RES-REQ bestimmt, die beiden kürzeren Zeitspannen T3 und T4 für ein Burst-Format mit kurzen Zufallszugriffsnachrichten RES-REQ. Die längeren Zeitspannen T1 und T2 können beispielsweise für ein Burst-Format mit einer QPSK-Modulation und einer Kodierrate von ½ eingesetzt werden, entsprechend beispielsweise einer Länge der Zufallszugriffsnachrichten RES-REQ von 48 Bits, und die kürzeren Zeitspannen T3 und T4 für ein Burst-Format mit einer 16-QAM-Modulation und einer Kodierrate von ½, entsprechend beispielsweise einer Länge der Zufallszugriffsnachrichten RES-REQ von 24 Bits.

Nachdem die Teilnehmerstationen MS1 und MS2 abhängig von ihren aktuell erfahrenen Kanalbedingungen jeweils ein Burst-Format ausgewählt haben, bestimmen sie weiterhin die für das jeweilige Burst-Format zur Verfügung stehenden Zeitspannen für den Zufallszugriff. Hierzu ist den Teilnehmerstationen MS1 und MS2 eine der Darstellung der Figur 2 entsprechende Zuordnungsvorschrift bekannt. Gemäß der Konstellation der Figur 1 stellt die Teilnehmerstation MS1 somit fest, dass sie ihre Zufallszugriffsnachrichten RES-REQ in den Zeitspannen T3 oder T4 versenden darf, während die Teilnehmerstation MS2 feststellt, dass sie ihre Zufallszugriffsnachrichten RES-REQ in den Zeitspannen T1 oder T2 versenden darf.

Die Funkressourcen, welche für die Zufallszugriffsnachrichten RES-REQ zur Verfügung stehen, werden somit in mehrere Teile aufgeteilt, wobei die verschiedenen Teile verschiedenen Burst-Formaten zugeordnet werden. Ein Teil, welcher einem bestimmten Burst-Format zugeordnet ist, darf hierbei ausschließlich für die Versendung von Zufallszugriffsnachrichten RES-REQ dieses Burst-Formats verwendet werden. Für ein bestimmtes Burst-Format steht somit lediglich ein Teil der Zufallszugriffszeitspanne TREQ zur Verfügung. Durch die Zuordnung von Burst-Formaten zu Bestandteilen der Zufallszugriffszeitspanne TREQ erfolgt eine Gruppierung von Teilnehmerstationen in Bezug auf die möglichen Zeitpunkte für ihre Zufallszugriffe. Dadurch, dass Gruppen von Teilnehmerstationen existieren, welche nur zu bestimmten Zeiten der Zufallszugriffszeitspanne TREQ Zufallszugriffsnachrichten RES-REQ versenden dürfen, wobei für die Gruppen verschiedene Burst-Formate verwendet werden, sinkt das Kollisionsrisiko und somit im Mittel die von den Teilnehmerstationen erfahrene Verzögerung.

Die Gruppierung der Teilnehmerstationen erfolgt nicht durch die Basisstation BS. Würde die Gruppierung durch die Basisstation BS erfolgen, so müsste diese den Teilnehmerstationen ihre jeweilige Gruppenzugehörigkeit signalisieren. Bei dem beschriebenen Verfahren hingegen ermitteln die Teilnehmerstationen ihre Gruppenzugehörigkeit selbständig unter Verwendung von Messungen und Zuordnungstabellen. Hierdurch kann eine Signalisierung der Gruppenzugehörigkeit durch die Basisstation BS unterbleiben, wodurch Funkressourcen eingespart werden.

Vergleicht man die Aufteilung der Zufallszugriffszeitspanne TREQ gemäß Figur 2 mit dem Fall, dass für alle Zufallszugriffsnachrichten RES-REQ lediglich das Burst-Format mit den längeren Zufallszugriffsnachrichten RES-REQ verwendet wird, so stellt man fest, dass durch die Möglichkeit der Verwendung des Burst-Formats mit den kürzeren Zufallszugriffsnachrichten RES-REQ eine vierte Zeitspanne für die Versendung von Zufallszugriffsnachrichten RES-REQ zur Verfügung steht, während bei alleiniger Verwendung des Burst-Formats mit den längeren Zufallszugriffsnachrichten RES-REQ lediglich drei Zeitspannen zur Verfügung stehen würden. Die Verwendung des Burst-Formats mit den kürzeren Zufallszugriffsnachrichten RES-REQ erhöht somit die Anzahl der pro Zufallszugriffszeitspanne TREQ versendbaren Zufallszugriffsnachrichten RES-REQ, wodurch die Kollisionswahrscheinlichkeit reduziert wird. Eine geringe Kollisionswahrscheinlichkeit bedeutet, dass das System eine größere Anzahl von Teilnehmerstationen bei gleich bleibender Länge der Zufallszugriffszeitspanne TREQ unterstützen kann.

## Patentansprüche

1. Verfahren zur Kommunikation per Funk zwischen einer netzseitigen Funkstation (BS) und Teilnehmerstationen (MS1, MS2), bei dem
Zeitspannen (TREQ) zur Verfügung stehen zur Versendung von Zufallszugriffsnachrichten (RES-REQ), welche einen Funkressourcenbedarf signalisieren, durch die Teilnehmerstationen (MS1, MS2),
**dadurch gekennzeichnet,**
**dass** zumindest zwei Teilnehmerstationen (MS1, MS2) für ihre Zufallszugriffsnachrichten (RES-REQ) voneinander verschiedene Modulationsverfahren und/oder voneinander verschiedene Kodierverfahren verwenden.

2. Verfahren nach Anspruch 1, bei dem
sich die Längen der Zufallszugriffsnachrichten (RES-REQ) der zumindest zwei Teilnehmerstationen (MS1, MS2) voneinander unterscheiden.

3. Verfahren nach Anspruch 1 oder 2, bei dem
die zumindest zwei Teilnehmerstationen (MS1, MS2) das jeweilige Modulationsverfahren und/oder Kodierverfahren verwenden in Abhängigkeit von jeweiligen aktuellen Funkkanalbedingungen zwischen der netzseitigen Funkstation (BS) und der jeweiligen Teilnehmerstation (MS1, MS2).

4. Verfahren nach Anspruch 3, bei dem
die zumindest zwei Teilnehmerstationen (MS1, MS2) die aktuellen Funkkanalbedingungen jeweils unter Verwendung von Messungen der Empfangsstärke von zumindest einem von der netzseitigen Funkstation (BS) ausgestrahlten Signal bestimmen.

5. Verfahren nach einem der Ansprüche 1 bis 4, bei dem
die Teilnehmerstationen (MS1, MS2) in ersten Zeitspannen (T1, T2) ausschließlich Zufallszugriffsnachrichten (RES-REQ) eines ersten Modulationsverfahrens und/oder Kodierverfahrens und in zweiten Zeitspannen (T3, T4) ausschließlich Zufallszugriffsnachrichten (RES-REQ) eines zweiten Modulationsverfahrens und/oder Kodierverfahrens versenden.

6. Verfahren nach Anspruch 5, bei dem
sich die Länge der ersten Zeitspannen (T1, T2) von der Länge der zweiten Zeitspannen (T3, T4) unterscheidet.

7. Verfahren nach Anspruch 5 oder 6, bei dem
den Teilnehmerstationen (MS1, MS2) eine Zuordnung bekannt ist zwischen einerseits jeweils einem Modulationsverfahren und/oder Kodierverfahren und andererseits für die Versendung von Zufallszugriffsnachrichten (RES-REQ) dieses Modulationsverfahrens und/oder Kodierverfahrens zur Verfügung stehenden Zeitspannen (T1, T2, T3, T4).

8. Verfahren zur Kommunikation per Funk zwischen einer netzseitigen Funkstation (BS) und Teilnehmerstationen (MS1, MS2), bei dem
Zeitspannen (TREQ) zur Verfügung stehen zur Versendung von Zufallszugriffsnachrichten (RES-REQ), welche einen Funkressourcenbedarf signalisieren, durch die Teilnehmerstationen (MS1, MS2),
**dadurch gekennzeichnet,**
**dass** die netzseitige Funkstation (BS) Zufallszugriffsnachrichten (RES-REQ) mit voneinander verschiedenen Modulationsverfahren und/oder voneinander verschiedenen Kodierverfahren empfängt.

9. Verfahren nach Anspruch 8, bei dem
sich die Längen der Zufallszugriffsnachrichten (RES-REQ) mit voneinander verschiedenen Modulationsverfahren und/oder voneinander verschiedenen Kodierverfahren voneinander unterscheiden.

10. Verfahren nach Anspruch 8 oder 9, bei dem
die netzseitige Funkstation (BS) von Teilnehmerstationen (MS1, MS2) in ersten Zeitspannen (T1, T2) ausschließlich Zufallszugriffsnachrichten (RES-REQ) eines ersten Modulationsverfahrens und/oder Kodierverfahrens und in zweiten Zeitspannen (T3, T4) ausschließlich Zufallszugriffsnachrichten (RES-REQ) eines zweiten Modulationsverfahrens und/oder Kodierverfahrens empfängt.

11. Verfahren nach Anspruch 10, bei dem
sich die Länge der ersten Zeitspannen (T1, T2) von der Länge der zweiten Zeitspannen (T3, T4) unterscheidet.

12. Netzseitige Funkstation (BS) zur Kommunikation per Funk mit Teilnehmerstationen (MS1, MS2),
mit Mitteln zum Empfangen von Zufallszugriffsnachrichten (RES-REQ), welche einen Funkressourcenbedarf signalisieren, in hierfür zur Verfügung stehenden Zeitspannen (TREQ),
**gekennzeichnet durch**
Mittel zum Empfangen von Zufallszugriffsnachrichten (RES-REQ) mit voneinander verschiedenen Modulationsverfahren und/oder voneinander verschiedenen Kodierverfahren.

13. Teilnehmerstation (MS1, MS2) zur Kommunikation per Funk mit einer netzseitigen Funkstation (BS),
mit Mitteln zum Versenden von Zufallszugriffsnachrichten (RES-REQ), welche einen Funkressourcenbedarf signalisieren, in hierfür zur Verfügung stehenden Zeitspannen (TREQ),
**gekennzeichnet durch**
Mittel zum Verwenden von voneinander verschiedenen Modulationsverfahren und/oder voneinander verschiedenen Kodierverfahren für ihre Zufallszugriffsnachrichten (RES-REQ).
